# EUROPÄISCHE PATENTSCHRIFT

(11) **EP 0 636 956 B1**
(45) Veröffentlichungstag und Bekanntmachung des Hinweises auf die Patenterteilung: **02.06.1999**
(21) Anmeldenummer: 94110920.9
(22) Anmeldetag: 13.07.1994
(51) Int. Cl.: G05B 19/042, G05B 19/408

(54) **Aufdatverfahren**
Method of data loading
Méthode de chargement de données

(30) Priorität: 28.07.1993 DE 4325326
(43) Veröffentlichungstag der Anmeldung: 01.02.1995
(73) Patentinhaber: SIEMENS AKTIENGESELLSCHAFT, 80333 München (DE)
(72) Erfinder: Barthel, Herbert Dipl.-Ing., D-91074 Herzogenaurach (DE); Schütz, Hartmut Dipl.-Ing., D-91336 Heroldsbach (DE); Daar, Horst Dr., D-91058 Erlangen (DE)

(56) Entgegenhaltungen:
- EP-A- 0 460 307
- EP-A- 0 460 308
- US-A- 4 872 106

## Beschreibung

Die vorliegende Erfindung betrifft ein Aufdatverfahren für ein Zusatzautomatisierungssystem, das an ein aus mindestens einem Anfangsautomatisierungssystem bestehenden, mittels eines abgearbeiteten Programms einen technischen Prozeß bzw. eine technische Anlage steuernden Automatisierungssystem angekoppelt ist.

Redundante Automatisierungssysteme sind weit verbreitet. Meist sind die Automatisierungssysteme dabei einfach oder doppelt redundant, d.h. es werden zwei bzw. drei Automatisierungssysteme zur Steuerung ein und desselben technischen Prozesses bzw. ein und derselben technischen Anlage verwendet. Bei einer derartigen Konfiguration kann es vorkommen, daß ein Teilsystem ausfällt und die technische Anlage bzw. der technische Prozeß durch das verbleibende Teilsystem (Anfangsautomatisierungssystem) bzw. die verbleibenden Teilsysteme geführt wird. Nach dem Austausch bzw. der Reparatur des ausgefallenen Teilsystems muß dieses Teilsystem wieder an das mindestens eine Anfangsautomatisierungssystem angekoppelt werden. Bisher geschieht dies z.B. dadurch, daß das die technische Anlage momentan steuernde Anfangsautomatisierungssystem die Programmabarbeitung unterbricht, die nötigen Betriebsdaten vom Anfangszum Zusatzautomatisierungssystem übertragen werden und sodann das Anfangs- und das Zusatzautomatisierungssystem die Programmabarbeitung fortsetzen und so gemeinsam die Führung der technischen Anlage übernehmen.

Diese Vorgehensweise ist insofern nicht optimal, als während des Aufdatens eine Kontrolle der technischen Anlage nicht gewährleistet ist. Andererseits kann es unter Umständen schwierig, gefährlich und zeitaufwendig sein, eine Anlage herunterzufahren und später wieder zu starten.

Aus der EP-A-0 460 308 ist ein Aufdatverfahren für den Datenbestand eines redundanten Prozessors in einem Prozeßsteuersystem angegeben. Dabei werden die Daten des ersten Prozessorsystems, die aufgrund des von diesem durchgeführten steuerungstechnischen Prozesses permanenten Veränderung unterworfen sind, periodisch an den redundanten Prozessors übertragen, so daß dieser im Falle eines Ausfalls des ersten Prozessors die Prozeßsteuerung übernehmen kann. Von Nachteil ist in diesem Zusammenhang jedoch, daß der nach jedem Steuerzyklus durchgeführte Datentransfer die Zykluszeit der Steuerzyklen erhöht, so daß sich entsprechend die Zeit, die bis zur Reaktion auf im Prozeß auftretende Ereignisse verstreicht, erhöht.

Die Aufgabe der vorliegenden Erfindung besteht folglich darin, ein Aufdatverfahren zur Verfügung zu stellen, bei dem diese Nachteile nicht auftreten.

Die Aufgabe wird mittels eines Aufdatverfahrens für ein Zusatzautomatisierungssystem, das an ein aus mindestens einem Anfangsautomatisierungssystem bestehendes, mittels eines abgearbeiteten Programms einen technischen Prozeß bzw. eine technische Anlage steuerndes Automatisierungssystem angekoppelt ist, wobei das Aufdatverfahren unter Beibehaltung der Steuerung des technischen Prozesses bzw. der technischen Anlage durchführbar ist, wobei zum Aufdaten ein zeitunkritischer Zustand des technischen Prozesses bzw. der technischen Anlage abgewartet wird und wobei das Aufdaten vollständig während dieses zeitunkritischen Zustands erfolgt, dadurch gelöst, daß dem Anfangsautomatisierungssystem Datenkonfigurationen zeitunkritischer Zustände vorgegeben werden, so daß zeitunkritische Zustände des Anfangsautomatisierungssystems erkennbar sind.

Ferner ist es möglich, daß das Aufdaten in Zeitscheiben erfolgt, die in die Programmabarbeitung des Anfangsautomatisierungssystems eingefügt werden.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Dabei zeigen:
FIG 1 ein Blockschaltbild eines Automatisierungssystems;
FIG 2 das Prinzip des Einstreuens der Zeitscheiben und
FIG 3 einen Ausschnitt der Speicherbelegung der Teilsysteme.

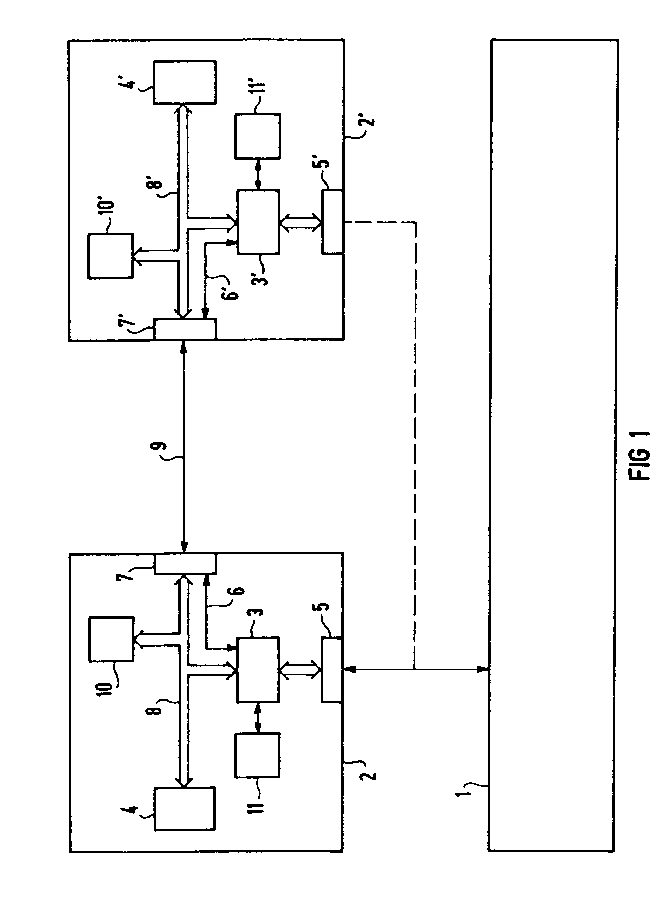

Gemäß FIG 1 wird eine - nur schematisch dargestellte - technische Anlage 1, in der ein technischer Prozeß abläuft, durch das Anfangsautomatisierungssystem 2 gesteuert. Das Automatisierungssystem 2 wird im folgenden kurz als Anfangssystem bezeichnet. Ebenso wird das Automatisierungssystem 2' als Zu satzsystem bezeichnet.

Zur Steuerung der technischen Anlage 1 weist das Anfangssystem 2 einen Prozessor 3 auf, der zur Steuerung der technischen Anlage 1 ein Programm abarbeitet, das im Arbeitsspeicher 4 abgespeichert ist. Die Steuerung der technischen Anlage 1 erfolgt dabei über die Anlagenschnittstelle 5.

Das Zusatzsystem 2' besteht im wesentlichen aus den gleichen Komponenten: Prozessor 3', Arbeitsspeicher 4' und Anlagenschnittstelle 5'.

Im vorliegenden Fall ist angenommen, daß das Anfangssystem 2 die technische Anlage 1 ausschließlich steuert und daß das Zusatzsystem 2' an das Anfangssystem 2 angekoppelt werden soll, um bei einem Ausfall des Anfangssystems 2 die Steuerung der technischen Anlage 1 sofort übernehmen zu können. Hierzu muß nicht nur das Programm im Arbeitsspeicher 4' identisch mit dem Programm im Arbeitsspeicher 4 sein, sondern es müssen auch die Prozeßdaten in den beiden Automatisierungssystemen 2, 2' übereinstimmen.

Um diese Übereinstimmung der Prozeßdaten aufdatstoßfrei zu erreichen, wird gemäß einer Ausführungsform der vorliegenden Erfindung im Arbeitsspeicher 4 abgelegt, welche Aufdatzeit benötigt wird, um das Aufdaten des Zusatzsystems 2' durchführen zu können. Diese Aufdatzeit ist selbstverständlich vom Umfang der aufzudatenden Daten und der Leistungsfähigkeit der Kommunikation zwischen den Automatisierungssystemen 2, 2' abhängig.

Ferner sind dem Anfangssystem 2 die Datenkonfigurationen zeitunkritischer Zustände und die zugehörigen Zeitdauern, während derer das Reagieren auf Prozeßänderungen zeitunkritisch ist, vorgegeben. Dadurch kann das Anfangssystem 2 die momentanen Prozeßdaten mit den Datenkonfigurationen zeitunkritischer Zustände vergleichen und so zeitunkritische Zustände erkennen. Wenn ein derartiger Zustand erkannt worden ist, wird die zugehörige Zeitdauer, während derer die Reaktion auf Zustandsänderungen zeitunkritisch ist, mit der Aufdatzeit verglichen. Wenn die Dauer des zeitunkritischen Zustands die Aufdatzeit übersteigt, aktiviert der Prozessor 3 über die Steuerleitung 6 die Kommunikationsschnittstelle 7. Diese ruft dann über den Bus 8 die aufzudatenden Daten aus dem Arbeitsspeicher 4 ab und überträgt sie über die Kommunikationsleitung 9 an die Kommunikationsschnittstelle 7' des Zusatzsystems 2'. Dieses wiederum speichert sie im Arbeitsspeicher 4' ab und signalisiert das Beenden des Aufdatvorgangs dem Prozessor 3'. Von diesem Moment an sind beide Automatisierungssysteme 2, 2' in der Lage, sofort die Steuerung der technischen Anlage zu übernehmen (sogenannter hot stand by-Betrieb).

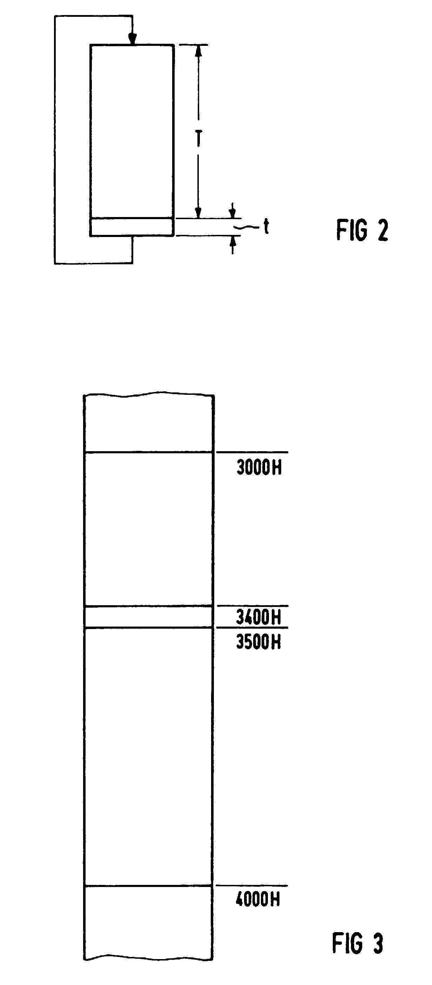

Obenstehendes Verfahren ist optimal, wenn ein zeitunkritischer Zustand der technischen Anlage existiert, dessen Dauer die Aufdatzeit übersteigt. Wenn dagegen kein derartiger Zustand existiert, muß in Zeitscheiben aufgedatet werden, die zyklisch in die Programmbearbeitung eingefügt werden. Hierzu ist zu erwähnen, daß gemäß FIG 2 die Programmabarbeitung bei Automatisierungsgeräten in der Regel zyklisch erfolgt. Die Programmzykluszeit ist dabei in FIG 2 mit T bezeichnet. Am Ende eines Programmzyklus wird nun in kleinen Zeitscheiben, deren Dauer t beträgt, das Programmzusatzsystem 2' nach und nach aufgedatet. Die dadurch entstehende Verlängerung der Programmzykluszeit T ist dabei vernachlässigbar. Anstelle der Einfügung nur einer Zeitscheibe pro Zeitzyklus ist es selbstverständlich auch möglich, mehrere Zeitscheiben pro Programmzyklus einzufügen. Die Anzahl der Zeitscheiben ist dabei derart bemessen, daß sie mindestens einen vollständigen Aufdatdurchlauf entspricht.

Gemäß FIG 3 umfassen die aufzudatenden Daten einen Speicherbereich mit der Anfangsadresse 3000H (H = hexadezimal) und der Endadresse 4000H. Während einer Zeitscheibe wird dabei jeweils ein Speicherbereich von 100H vom Anfangssystem 2 an das Zusatzsystem 2' übertragen, beispielsweise der Speicherbereich von 3400H bis 3500H. Bei der nächsten Zeitscheibe würde dann entweder der Speicherbereich von 3300H bis 3400H (bei fallendem Adreßdurchlauf) bzw. von 3500H bis 3600H übertragen werden (bei steigendem Adreßdurchlauf).

Während jedes Programmzyklus werden mindestens einmal vom Anfangssystem 2 Eingangssignale von der technischen Anlage eingelesen und Ausgangssignale an die technische Anlage 1 ausgegeben. Das Zusatzsystem 2' dagegen darf während des Aufdatens selbstverständlich weder das Programm noch schreibende Peripheriezugriffe ausführen. Nur lesende Peripheriezugriffe sind zugelassen. Das Mitausführen von lesenden Peripheriezugriffen ist sogar von Vorteil, da sich hierdurch das Zusatzsystem 2' zwangsweise mit aktualisiert.

Wenn die Eingangssignale die einzigen Signale wären, deren Wert sich ändert, müßte der aufzudatende Speicherbereich nur einmal von Anfangssystem 2 an das Zusatzsystem 2' übertragen werden und ansonsten die Eingangssignale von der technischen Anlage 1 vom Zusatzsystem 2' mit eingelesen werden. Es ändern sich jedoch auch andere Signale, beispielsweise Zähler- und Timerwerte sowie die Ausgangssignale. Bevor der Aufdatvorgang als beendet angesehen wird, muß auch die Gleichheit dieser Daten sichergestellt sein. Hierzu werden durch die vorliegende Erfindung zwei mögliche Vorgehensweisen zur Verfügung gestellt. Wenn die Kommunikationsschnittstellen 7, 7' und die Kommunikationsleitung 9 leistungsfähig sind, wird mit Vorteil folgendes Verfahren ausgeführt:

Eine Übertragungsadresse wird zunächst gleich der Anfangsadresse gesetzt, im vorliegenden Beispiel also gleich 3000H. Bei Erreichen der ersten Zeitscheibe werden die ersten 100H Byte vom Anfangssystem 2 an das Zusatzsystem 2' übertragen. Sodann wird die Übertragungsadresse um die Anzahl der übertragenen Daten erhöht, im vorliegenden Fall also auf 3100H gesetzt. Während des nun folgenden Zyklus, also in der Zeit bis zum Erreichen der nächsten Zeitscheibe werden alle schreibenden Zugriffe auf den Speicherbereich von 3000H bis 3100H, die das Anfangssystem 2 ausführt, erfaßt. Sie werden über die Kommunikationsschnittstelle 7 sofort an die Kommunikationsschnittstelle 7' gemeldet, die die Adressen und die Werte der neu geschriebenen Daten im Zusatzspeicher 10' ablegt. Der Zusatzspeicher 10' ist in diesem Fall als Umlaufpuffer organisiert. Der Prozessor 3' ist daher in der Lage, den Umlaufpuffer 10' sofort wieder auszulesen und so den schon aufgedateten Speicherbereich des Arbeitsspeichers 4' zu aktualisieren bzw. auf dem aktuellen Stand zu halten.

Bei Erreichen der nächsten Zeitscheibe werden - gemäß obigem Beispiel - die nächsten 100H Byte mit den Adressen von 3100H bis 3200H übertragen. Die Übertragungsadresse wird sodann gleich 3200H gesetzt. Während des nächsten Zyklus werden alle schreibenden Zugriffe auf den Speicherbereich von 3000H bis 3200H sofort an das Zusatzsystem 2' gemeldet, so daß wiederum der bereits aufgedatete Speicherbereich aktualisiert gehalten werden kann.

Dieses Übertragen der Daten, Neusetzen der Übertragungsadresse und Aktualisieren des bereits aufgedatenen Speicherbereichs wird solange wiederholt, bis die Übertragungsadresse den Wert 4000H erreicht. Dann ist der Aufdatvorgang abgeschlossen und das Zusatzsystem 2' kann in den hot stand by-Betrieb übergehen.

Wenn sich während des Aufdatens sehr viele Änderungen der bereits aufgedateten Datenbereiche ergeben, kann es geschehen, daß die Leistungsfähigkeit der Kommunikationseinrichtung zwischen den Automatisierungssystemen 2, 2' nicht ausreicht, um den bereits aufgedateten Speicherbereich aktualisiert zu halten. In diesem Fall muß das Anfangssystem 2 doch unterbrechen. Das Aufdaten kann in diesem Fall also doch nicht ganz aufdatstoßfrei erfolgen. In der bei weitem überwiegenden Mehrzahl der Fälle wird das Verfahren jedoch auch ohne Unterbrechung der Programmabarbeitung ausführbar sein.

Wenn keine leistungsfähige Kommunikationseinrichtung zwischen den Automatisierungssystemen 2, 2' zur Verfügung steht, wird das Aufdaten vorzugsweise wie folgt ausgeführt:

Es werden, analog zum obenstehend beschriebenen Fall, jeweils 100H Byte vom Anfangssystem 2 an das Zusatzsystem 2' übertragen. Dort werden sie zunächst im Zusatzspeicher 10' abgespeichert. Während des Programmzyklus zwischen zwei Zeitscheiben werden die in den Zusatzspeicher 10' eingeschriebenen Daten mit den korrespondierenden Daten im Arbeitsspeicher 4' verglichen und sodann in den Arbeitsspeicher 4' eingeschrieben. Dabei vermerkt der Prozessor 3', ob die Daten gleich sind. Wenn die Daten gleich sind, wird der Wert des Zählers 11' um Eins erhöht. Ansonsten wird der Zähler 11' auf den Wert Null gesetzt.

Die Aufdatdurchläufe erfolgen dabei gegebenenfalls abwechselnd mit steigendem und mit fallendem Adreßdurchlauf. Das Aufdaten gilt als durchgeführt, wenn während einer vorgegebenen Anzahl aufeinanderfolgenden Zeitscheiben bei allen Vergleichsvorgängen Gleichheit festgestellt wurde, d.h. sich die übertragenen Daten von den bereits im Arbeitsspeicher 4 befindlichen Daten nicht unterscheiden.

Wenn das Aufdaten als durchgeführt gilt, wird bei Erreichen der nächsten Zeitscheibe in beiden Automatisierungssystemen 2, 2' eine Prüfgröße über die aufzudatenden bzw. die aufgedateten Daten ermittelt. Die Prüfgrößen können beispielsweise eine Prüfsumme oder eine Signatur sein. Die ermittelten Prüfgrößen werden über die Kommunikationsschnittstellen 7, 7' ausgetauscht und miteinander verglichen. Sind die Prüfgrößen gleich, gilt das Aufdaten als beendet. Ansonsten wird der Zähler 11' auf Null gesetzt und ein erneuter Aufdatvorgang vorgenommen.

## Patentansprüche

1. Aufdatverfahren für ein Zusatzautomatisierungssystem (2'), das an ein aus mindestens einem Anfangsautomatisierungssystem (2) bestehendes, mittels eines abgearbeitenden Programms einen technischen Prozeß bzw. eine technische Anlage (1) steuerndes Automatisierungssystem (2) angekoppelt ist, wobei das Aufdatverfahren unter Beibehaltung der Steuerung des technischen Prozesses bzw. der technischen Anlage (1) durchführbar ist, wobei zum Aufdaten ein zeitunkritischer Zustand des technischen Prozesses bzw. der technischen Anlage (1) abgewartet wird und wobei das Aufdaten vollständig während dieses zeitunkritischen Zustands erfolgt, **dadurch gekennzeichnet**, daß dem Anfangsautomatisierungssystems (2) Datenkonfigurationen zeitunkritischer Zustände vorgegeben werden, so daß zeitunkritische Zustände für das Anfangsautomatisierungssystem (2) erkennbar sind.

2. Aufdatverfahren nach Anspruch 1, **dadurch gekennzeichnet**, daß dem Anfangsautomatisierungssystem (2) die benötigte Aufdatzeit vorgegeben wird, so daß für das Anfangsautomatisierungssystem (2) erkennbar ist, ob die Zeitdauer des zeitunkritischen Zustands die Aufdatzeit übersteigt.

## Claims

1. Method of updating a supplemental automation system (2') which is coupled to an automation system (2) which consists of at least one starting automation system (2) and controls a technical process or a technical system (1) by means of an executed program, wherein the update method can be carried out while maintaining control of the technical process or the technical system (1), wherein a non-time-critical state of the technical process or the technical system (1) is awaited for updating purposes and wherein updating takes place completely during this non-time-critical state,
characterised in that data configurations of non-time-critical states are specified to the starting automation system (2) so non-time-critical states of the starting automation system (2) can be recognised.

2. Update method according to claim 1, characterised in that the necessary update time is specified to the starting automation system (2) so the starting automation system (2) can recognise whether the time duration of the non-time-critical state exceeds the update time.

## Revendications

1. Procédé de chargement de données pour un système (2') d'automatisation supplémentaire, qui est raccordé à un système (2) d'automatisation constitué d'au moins un système (2) d'automatisation initial et commandant une opération technique ou une installation (1) technique au moyen d'un programme de traitement, le procédé de chargement de données pouvant être réalisé tout en conservant la commande de l'opération technique ou de l'installation (1) technique, un état non urgent de l'opération technique ou de l'installation (1) technique étant attendu pour le chargement de données et le chargement de données s'effectuant totalement pendant cet état non urgent, caractérisé en ce que l'on prescrit au système (2) d'automatisation initial des configurations de données d'état non urgent, si bien que des états non urgents peuvent être reconnus pour le système (2) d'automatisation initial.

2. Procédé de chargement de données suivant la revendication 1, caractérisé en ce que l'on prescrit au système (2) d'automatisation initial la durée de chargement dont on a besoin, si bien qu'il peut être reconnu pour le système (2) d'automatisation initial si la durée de l'état non urgent est supérieure à la durée de chargement de données.
